# Europäisches Patentamt

# European Patent Office

# Office européen des brevets

(19)

(11) Veröffentlichungsnummer: **0 142 750**
**B1**

(12) **EUROPÄISCHE PATENTSCHRIFT**

(45) Veröffentlichungstag der Patentschrift:
18.05.88

(51) Int. Cl.⁴: **A 01 B 19/06**

(21) Anmeldenummer: **84113145.1**

(22) Anmeldetag: **31.10.84**

(54) **Rüttelegge.**

(30) Priorität: **11.11.83 DE 3340821**

(43) Veröffentlichungstag der Anmeldung:
**29.05.85 Patentblatt 85/22**

(45) Bekanntmachung des Hinweises auf die Patenterteilung:
**18.05.88 Patentblatt 88/20**

(84) Benannte Vertragsstaaten:
**AT BE CH DE FR GB IT LI NL SE**

(56) Entgegenhaltungen:
**DE-A-1 964 571**
**DE-A-2 206 433**
**US-A-2 360 022**
**US-A-3 414 252**
**US-A-4 390 070**

(73) Patentinhaber: **Amazonen- Werke H. Dreyer GmbH & Co. KG, Postfach 51, D-4507 Hasbergen- Gaste (DE)**

(72) Erfinder: **Higgen, Reinhard, Gartenstrasse 1, D-2872 Hude i. O. (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Rüttelegge mit einem Tragrahmen und zumindest zwei hintereinander angeordneten, sich quer zur Fahrtrichtung erstreckenden und mit elastisch angeordneten Bodenbearbeitungszinken besetzten Eggenbalken, die über Schwingen an dem Tragrahmen angeordnet und im Betrieb über eine Antriebsquelle in quer zur Fahrtrichtung hin- und hergehende Bewegungen versetzt werden wobei die Eggenbalken jeweils aus einem entgegen der Fahrtrichtung zumindest teilweise offenen Kastenbalken-Längsträger bestehen, an dessen Unterseite die Bearbeitungszinken befestigt sind.

Rütteleggen sollen bekanntlich durch seitliche Hin- und Herbewegung ihrer mit Zinken ausgerüsteten Eggenbalken den Boden lockern. Dabei ist es erforderlich, daß die Zinken beim Auftreffen auf Hindernisse, insbesondere Steine, im Boden diesen gegenüber in Fahrtrichtung ausweichen können, um nicht beschädigt zu werden. Gleichzeitig sollen die Zinken in seitlicher Richtung möglichst wenig ausweichen, d.h. ihren gegenseitigen Abstand aufrechterhalten, so daß keine Steine zwischen den Zinken eingeklemmt werden und die Lockerungswirkung der Zinken in seitlicher Richtung durch Ausweichen gegenüber beispielsweise harten Erdklumpen nicht beeinträchtigt wird.

Eine derartige Rüttelegge ist bereits durch die DE-A-1 964 571 bekannt geworden. Bei dieser Rüttelegge bestehen die Längsträger aus einem quasi geschlossenen Profil, bei dem die an sich offene Seite des Längsträgerprofils durch die Zinkenbefestigung geschlossen wird. Hierdurch kann der Zinkenbalken selbst die Zinken nicht abfedern. Die Zinken sind jeweils an einer gebogenen Blattfeder befestigt, damit die Zinken auf diese Weise im Boden befindlichen Steinen federnd ausweichen können. Weiterhin sind jeweils zwei benachbarte Zinken mit einem starren Verbindungsglied paarweise miteinander starr verbunden, damit die Abfederung der Zinken quer zur Fahrtrichtung verringert wird, um so eine gute Bodenbearbeitung der Zinken zu erreichen. Nachteilig ist bei dieser federnden Zinkenbefestigung der erhebliche konstruktive Aufwand.

Der Erfindung liegt die Aufgabe zugrunde, bei einer Rüttelegge der eingangs genannten Art eine einfache und wirksame Abfederung der Bodenbearbeitungswerkzeuge in und entgegen der Fahrtrichtung beim Auftreffen auf Hindernisse im Boden zu schaffen.

Diese Aufgabe wird erfindungsgemäß dadurch gelöst, daß die Längsträger U-förmig mit entgegen der Fahrtrichtung weisenden, elastisch aufeinander zu und voneinander weg bewegbaren freien Schenkeln ausgebildet und mit den oberen Schenkeln über die Schwingen mit dem Tragrahmen verbunden sind und daß die Bearbeitungszinken jeweils ausschließlich und direkt an den unteren Schenkeln der Längsträger befestigt sind.

Sämtliche Zinken sind nunmehr ohne Zwischenschaltung von federnden Bügeln unmittelbar am Eggenbalken befestigt. Dies ist eine sehr einfache Befestigungsart mit geringem Konstruktionsaufwand. Die Befestigung der Zinken direkt an dem Eggenbalken, der als Längsträger in Richtung seiner Achse, d.h., in seitlicher Richtung bezüglich der Rüttelegge eine hohe Stabilität aufweist, verhindert einerseits jegliche seitliche Ausgleichsbewegung der Zinken. Andererseits ermöglicht seine Ausbildung mit federndem U-Querschnitt eine Ausweichbewegung der Zinken in und entgegen der Fahrtrichtung, ohne daß dabei die Stabilität in seitlicher Richtung verringert wird. Die Kräfte auf die Zinken und auf den Eggenbalken werden erheblich reduziert, so daß Zinkenbrüche und Balkenverbiegungen auf einfachste Weise vermieden werden.

Zwar ist aus der US-PS-2 360 022 eine Egge bekannt, deren Eggenbalken als etwa U-förmige Längsträger ausgebildet sind. Die freien Schenkel sind jedoch nicht elastisch zueinander bewegbar. Die Zinken durchsetzen Öffnungen im unteren Schenkel des Längsträgers und liegen an der gesamten Höhe des Steges an und sind außerdem an diesem befestigt. Der Längsträger ist infolge dieser Maßnahmen versteift. Die Verbindung zwischen dem oberen Schenkel und dem Steg weist einen derart engen Radius auf, daß er ausreichend kräftig sein muß, um Relativbewegungen zwischen dem Steg und dem oberen Schenkel zu verhindern. Andernfalls würden auftretende Relativbewegungen zu einem Bruch des Übergangsbereiches führen.

Weiterhin sieht die Erfindung vor, daß die Längstrager aus Federstahl hergestellt sind. Hierdurch wird eine optimale Federwirkung erreicht. Hierbei ist vorgesehen, daß der Längsträger gehärtet ist, um so ein großes Widerstandsmoment des Eggenbalkens zu erreichen.

In einer bevorzugten Ausführung ist vorgesehen, daß in Abständen in Längsrichtung des Längsträgers gesehen zwischen den gegenüberliegenden Schenkeln des Längsträgers Anschläge angeordnet sind, daß die Anschläge in Normalstellung der Schenkel zueinander zumindest in Richtung auf einen Schenkel einen Abstand aufweisen. Hierdurch wird der Biegewinkel der freien Schenkel des U-förmigen Profils der Eggenbalken begrenzt. Somit können die Schenkel sich nur innerhalb des elastischen Bereiches verformen und bleibende Verbiegungen der Eggenbalken werden ausgeschlossen.

Weiterhin ist nach der Erfindung vorgesehen, daß zwischen den freien Schenkeln der Eggenbalken Dämpfungsmaterial eingelegt ist. Hierdurch wird einerseits der Biegewinkel begrenzt und andererseits stützt das Dämpfungsmaterial die freien Schenkel der Eggenbalken ab.

Damit eine sichere Befestigung der Eggenbalken an den Schwingen erreicht wird, ohne daß es zu starken Belastungen des oberen Schenkels kommt, ist erfindungsgemäß vorgesehen, daß in dem Bereich der Schwingenbefestigung Verstärkungsstücke an den Eggenbalken angeordnet sind.

Um eine differenzierte Elastizität für die Eggenbalken zu erhalten, weisen die freien Schenkel der Eggenbalken eine unterschiedliche Länge auf.

Um der stärkeren Belastung des vorderen Eggenbalkens durch die Erstbearbeitung des Bodens entgegenzuwirken, weist der vordere Eggenbalken eine geringere Elastizität als der hintere auf. Hierbei ist zu berücksichtigen, daß die Zinken des hinteren Eggenbalkens in dem durch die Zinken des vorderen Eggenbalkens gelockerten Boden arbeiten.

Weiterhin ist nach der Erfindung vorgesehen, daß zumindest ein Schenkel der Eggenbalken Einschnitte aufweist. Hierdurch wird eine differenzierte Elastizität erreicht.

Weitere Einzelheiten der Erfindung sind den übrigen Unteransprüchen, der Beispielsbeschreibung und den Zeichnungen zu entnehmen. Hierbei zeigen

Fig. 1 eine erfindungsgemäße Rüttelegge in der Seitenansicht,

Fig. 2 ein erfindungsgemäßer Eggenbalken mit eingelegtem Dämpfungsmaterial in der Seitenansicht,

Fig. 3 ein erfindungsgemäßer Eggenbalken mit einem Verstärkungsstück im Bereich der Schwingenbefestigung in der Ansicht von hinten und

Fig. 4 ein erfindungsgemäßer Eggenbalken mit Einschnitten in Teilansicht und in der Ansicht von unten.

Die Rüttelegge besteht im wesentlichen aus der Getriebeeinheit 1, dem an der Getriebeeinheit 1 festgeschraubten Tragrahmen 2 und den beiden hintereinander angeordneten Eggenbalken 3, die mit den Bodenbearbeitungszinken 4 besetzt sind. Die Eggenbalken 3 sind mit Hilfe der Schwingen 5 an dem Tragrahmen 2 angeordnet. Die Rüttelegge wird mit Hilfe der Dreipunktkupplung 6 mit dem Dreipunktkraftheber einer landwirtschaftlichen Zug- oder Arbeitsmaschine gekuppelt. Hinter der Rüttelegge läßt sich in bekannter und daher nicht dargestellter Weise eine nachlaufende Walze sowie eine Drillmaschine anordnen.

Der Antrieb der Eggenbalken 3 erfolgt über die an die Eingangswelle 7 der Getriebeeinheit 1 angeschlossenen Gelenkwelle von der Zapfwelle einer landwirtschaftlichen Zug- oder Arbeitsmaschine. Die Drehbewegung der Eingangswelle 7 wird durch den in der Getriebeeinheit 1 angeordneten Taumelkörpertrieb in eine drehschwingende Bewegung umgewandelt und auf die Schwinge 5 übertragen. Diese drehschwingende Bewegung versetzt die Eggenbalken in eine quer zur Fahrtrichtung der Maschine hin- und hergehende Bewegung. Durch diese hin- und hergehende Bewegung der Eggenbalken 3 wird der Boden durch die Zinken 4 gekrümelt.

Die Eggenbalken 3 sind als U-förmige Längsträger 8 ausgebildet, wobei sich die offene Seite 9 der Längsträger 8 sich jeweils auf der der Fahrtrichtung 10 abgewandten Seite 11 befindet. An dem oberen Schenkel 12 der Längsträger 8 sind die Halterungen 13 der Schwingen 5 angeordnet, während an dem gegenüberliegenden unteren Schenkel 14 die Zinken 4 befestigt sind. Die U-förmigen Längsträger 8 sind jeweils über ihre ganze Länge auf ihrer Rückseite 11 offen. Die Längsträger 8 sind auf Federstahl hergestellt und nach dem Einstanzen der Löcher für die Befestigung der Schwingenhalterung und der Zinken 4 gehärtet.

Durch Anbringung der Zinken 4 an die offenen U-förmigen Längsträger 8 ist es möglich, daß die Zinken 4 beim Auftreffen auf Steinen diesen nach hinten etwas ausweichen können, da der untere Schenkel 14 elastisch verbogen wird. Der Zinken 4 prallt also nicht mit voller Wucht auf den im Boden festsitzenden Stein auf. Ein Teil der Energie wird durch die Verformung des U-förmigen Längsträgers 8 aufgenommen. Die Zinken 4 werden nicht beschädigt.

Zwischen den gegenüberliegenden Schenkeln 12 und 14 sind die als einstellbare Schrauben 15 ausgebildeten Anschläge 16 in Abständen in Längsrichtung des Längsträgers 8 gesehen angeordnet. In Normalstellung der Schenkel 12 und 14 zueinander weisen die Anschläge 16 einen Abstand A zu dem unteren Schenkel 14 auf, damit der untere Schenkel 14 sich innerhalb des elastischen Bereiches verformen kann und die Zinken abgefedert sind. Die Anschläge 16 verhindern, daß die Schenkel 14 bleibend verformt werden. Somit begrenzen die Anschläge 16 den Biegewinkel der Schenkel 12 und 14 zueinander, damit nicht ein Biegewinkel innerhalb des bleibenden Verformungsbereiches erreicht wird.

Die freien Schenkel 12 und 14 weisen eine unterschiedliche Länge L auf, damit eine verschieden große Elastizität für die beiden Eggenbalken erreicht wird. Hierbei weisen die Schenkel des hinteren Eggenbalkens eine größere Länge als die Schenkel des vorderen Eggenbalkens auf. Somit ergibt sich, daß der hintere Eggenbalken eine größere Elastizität als der vordere Eggenbalken besitzt.

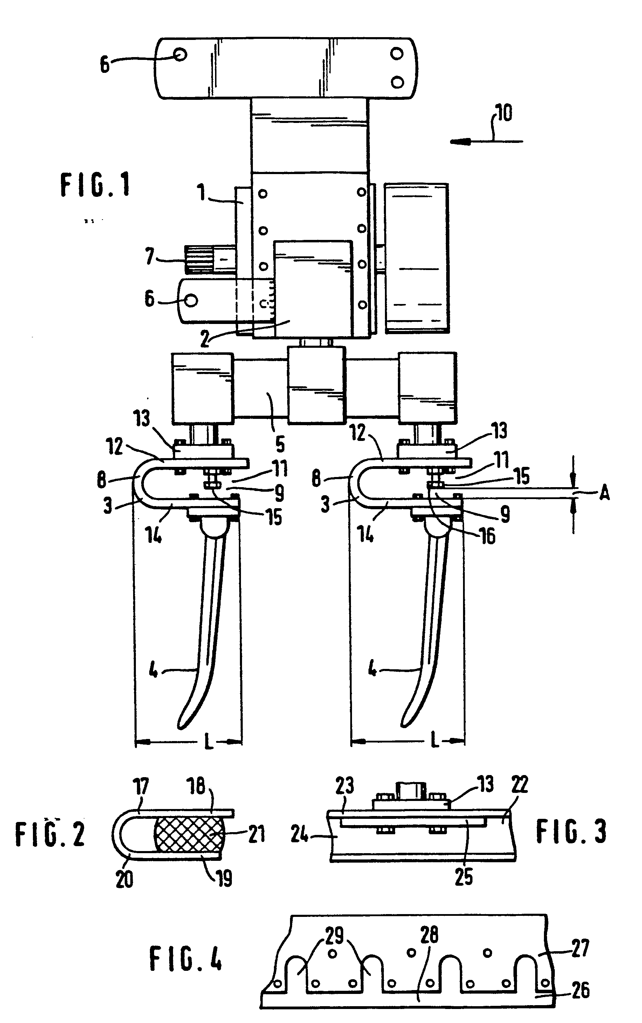

Bei dem Eggenbalken 17 gemäß der Fig. 2 ist zwischen den freien Schenkeln 18 und 19 des U-förmigen Längsträgers 20 ein aus einem Dämpfungsmaterial bestehender Puffer 21 eingelegt. Dieser Puffer 21 kann bis zu einem gewissen Betrag zusammengedrückt werden. Gleichzeitig wirkt der zusammengedrückte Puffer 21 als Anschlag für die Begrenzung des Biegewinkels der beiden freien Schenkel 18 und 19 zueinander. Wenn ein an dem unteren Schenkel 19 befestigter Zinken auf einen im Boden befindlichen Stein trifft, werden die Schenkel 18 und 19 soweit zusammengebogen wie es der Puffer 21 erlaubt. Nach dem Passieren des Steines federt der Zinken mit dem unteren Schenkel 19 in seine Ursprungslage zurück.

Bei dem Eggenbalken 22 gemäß Fig.3 ist in dem Bereich der Schwingenhalterungsbefestigung 13 an dem oberen Schenkel 23 des U-förmigen Längsträgers 24 ein Verstärkungsstück 25 angeordnet, um die eingeleiteten Kräfte auf einen größeren Bereich zu verteilen und um eine sichere Befestigung zu gewährleisten.

Bei dem Eggenbalken 26 gemäß Fig. 4 sind in dem unteren Schenkel 27 des U-förmigen Längsträgers 28 die Einschnitte 29 eingestanzt, um so eine differenzierte Elastizität des Eggenbalkens zu erhalten.

## Patentansprüche

1. Rüttelegge mit einem Tragrahmen (2) und zumindest zwei hintereinander angeordneten, sich quer zur Fahrtrichtung erstreckenden und mit elastisch angeordneten Bodenbearbeitungszinken (4) besetzten Eggenbalken (3, 17, 22, 26), die über Schwingen (5) an dem Tragrahmen (2) angeordnet und im Betrieb über eine Antriebsquelle (1) in quer zur Fahrtrichtung hin- und hergehende Bewegungen versetzt werden, wobei die Eggenbalken (3, 17, 22, 26) jeweils aus einem entgegen der Fahrtrichtung zumindest teilweise offenen Kastenbalken-Längsträger (8, 20, 24, 28) bestehen, an dessen Unterseite die Bearbeitungszinken (4) befestigt sind,
dadurch gekennzeichnet,
daß die Längsträger (8, 20, 24, 28) U-förmig mit entgegen der Fahrtrichtung weisenden, elastisch aufeinander zu und voneinander weg bewegbaren freien Schenkeln (12, 18, 23; 14, 19, 27) ausgebildet und mit den oberen Schenkeln (12, 18, 23) über die Schwingen (5) mit dem Tragrahmen (2) verbunden sind und daß die Bearbeitungszinken (4) jeweils ausschließlich und direkt an den unteren Schenkeln (14, 19, 27) der Längsträger (8, 20, 24, 28) befestigt sind.

2. Rüttelegge nach Anspruch 1,
dadurch gekennzeichnet, daß der Längsträger (8, 20, 24, 28) aus Federstahl hergestellt ist.

3. Rüttelegge nach Anspruch 1 oder 2,
dadurch gekennzeichnet, daß der Längsträger (8, 20, 24, 28) gehärtet ist.

4. Rüttelegge nach Anspruch 1,
dadurch gekennzeichnet, daß in Abständen in Längsrichtung des Längsträgers (8, 20, 24, 28) gesehen zwischen den gegenüberliegenden Schenkeln (12, 18, 23, 14, 19, 27) des Längsträgers (8, 20, 24, 28) Anschläge (16) angeordnet sind, daß die Anschläge (16) in Normalstellung der Schenkel (12, 18, 23, 14, 19, 27) zueinander zumindest in Richtung auf einen Schenkel (14, 19, 27) einen Abstand (A) aufweisen.

5. Rüttelegge nach Anspruch 4,
dadurch gekennzeichnet, daß die Anschläge (16) einstellbar sind.

6. Rüttelegge nach Anspruch 5,
dadurch gekennzeichnet, daß die Anschläge (16, 21) den Biegewinkel der Schenkel (12, 18, 23, 14, 19, 27) zueinander begrenzen.

7. Rüttelegge nach Anspruch 1,
dadurch gekennzeichnet, daß zwischen den freien Schenkeln (18, 19) der Eggenbalken (17) Dämpfungsmaterial (21) eingelegt ist.

8. Rüttelegge nach Anspruch 1,
dadurch gekennzeichnet, daß in dem Bereich der Schwingenbefestigung (13) Verstärkungsstücke (25) an dem Eggenbalken (22) angeordnet sind.

9. Rüttelegge nach Anspruch 1,
dadurch gekennzeichnet, daß die freien Schenkel (12, 14) der Eggenbalken (3) eine unterschiedliche Länge (L) aufweisen.

10. Rüttelegge nach Anspruch 1,
dadurch gekennzeichnet, daß der vordere Eggenbalken (12) eine geringere Elastizität als der hintere Eggenbalken (14) aufweist.

11. Rüttelegge nach Anspruch 1,
dadurch gekennzeichnet, daß zumindest ein Schenkel (27) der Eggenbalken (26) Einschnitte (29) aufweist.

12. Rüttelegge nach Anspruch 10 oder 11,
dadurch gekennzeichnet, daß die Einschnitte (29) an den beiden Eggenbalken unterschiedlich sind.

13. Rüttelegge nach Anspruch 1,
dadurch gekennzeichnet, daß die Zinken an dem vorderen Eggenbalken eine andere Länge als die Zinken an den hinteren Eggenbalken aufweisen.

14. Rüttelegge nach Anspruch 13,
dadurch gekennzeichnet, daß die Zinken an dem vorderen Eggenbalken eine geringere Länge als die Zinken an dem hinteren Eggenbalken aufweisen.

## Claims

1. Reciprocating harrow having a supporting frame (2) and at leaat two harrow bars (3, 17, 22, 26) disposed one behind the other, the bars extending at right angles to the direction of travel and being provided with resiliently disposed ground cultivating tines (4), the bars being disposed on the supporting frame (2) through the intermediary of rocker arms (5) and, during operation, being set in reciprocating motion at right angles to the direction of travel through the intermediary of a drive source (1), wherein the harrow bars (3, 17, 22, 26) each comprise a box-like elongate bar support member (8, 20, 24, 28) which is at least partially open oppositely to the direction of travel, and the cultivating tines (4) are secured to the underside of the respective elongate support member, characterised in that the elongate support members (8, 20, 24, 28) are U-shaped with free legs (12, 18, 23; 14, 19, 27), which extend oppositely to the direction of travel and are resiliently displaceable towards and away from each other, and the support members are connected to the supporting frame (2) by the upper legs (12, 18, 23) through the intermediary of the rocker arms (5), and in that the cultivating tines (4) are each exclusively and directly secured to the lower legs (14, 19, 27) of the elongate support members (8, 20, 24, 28).

2. Reciprocating harrow according to claim 1, characterised in that the elongate support member (8, 20, 24, 28) is made of spring steel.

3. Reciprocating harrow according to claim 1 or 2, characterised in that the elongate support member (8, 20, 24, 28) is hardened.

4. Reciprocating harrow according to claim 1, characterised in that stop members (16) are disposed at intervals, when viewed with respect to the longitudinal direction of the elongate support member (8, 20, 24, 28), between the opposed legs (12, 18, 23, 14, 19, 27) of the elongate support member (8, 20, 24, 28), and in that, in the normal position of the legs (12, 18, 23, 14, 19, 27) relative to one another, the stop members (16) have a spacing (A) at least in the direction of one leg (14, 19, 27).

5. Reciprocating harrow according to claim 4, characterised in that the stop members (16) are adjustable.

6. Reciprocating harrow according to claim 5, characterised in that the stop members (16, 21) define the bending angle of the legs (12, 18, 23, 14, 19, 27) relative to each other.

7. Reciprocating harrow according to claim 1, characterised in that damping material (21) is inserted between the free legs (18, 19) of the harrow bars (17).

8. Reciprocating harrow according to claim 1, characterised in that reinforcing parts (25) are disposed on the harrow bar (22) in the region of the rocker arm mounting (13).

9. Reciprocating harrow according to claim 1, characterised in that the free legs (12, 14) of the harrow bars (3) differ in length (L).

10. Reciprocating harrow according to claim 1, characterised in that the front harrow bar (12) has less resilience than the rear harrow bar (14).

11. Reciprocating harrow according to claim 1, characterised in that at least one leg (27) of the harrow bars (26) has recesses (29).

12. Reciprocating harrow according to claim 10 or 11, characterised in that the recesses (29) on the two harrow bars are different.

13. Reciprocating harrow according to claim 1, characterised in that the tines on the front harrow bar differ in length from the tines on the rear harrow bars.

14. Reciprocating harrow according to claim 13, characterised in that the tines on the front harrow bar are shorter in length than the tines on the rear harrow bar.

## Revendications

1. Herse alternative comportant un châssis (2) et au moins deux poutres de herse (3, 17, 22, 26) qui s'étendent transversalement à la direction de déplacement et sont garnies de dents (4) de traitement du sol, montées élastiquement, poutres qui sont reliées par des bras (5) au châssis (2) et en fonctionnement elles sont mises dans un mouvement alternatif transversalement à la direction de déplacement par l'intermédiaire d'une source motrice (1), les poutres (3, 17, 22, 26) étant constituées chaque fois par une poutre allongée en forme de caisson (8, 20, 24, 28) au moins partiellement ouverte dans la direction opposée à la direction de déplacement, des dents (4) pour travailler le sol étant fixées sur la face inférieure de cette poutre, caractérisée en ce que les poutres allongées (8, 20, 24, 28) à section en forme de U ouverte dans la direction opposée à la direction de déplacement ont des branches libres (12, 18, 23, 14, 19, 27) dirigées dans le sens opposé de la direction de déplacement, branches qui sont mobiles élastiquement l'une par rapport à l'autre pour se rapprocher ou s'écarter, et les branches supérieures (12, 18, 23) sont reliées au châssis (2) par des bras (5), les dents (4) pour le travail du sol étant fixées respectivement, exclusivement et directement sur les branches inférieures (14, 19, 27) de la poutre (8, 20, 24, 28).

2. Herse alternative selon la revendication 1, caractérisée en ce que les poutres (8, 20, 24, 28) sont réalisées en acier élastique.

3. Herse alternative selon la revendication 1 ou 2, caractérisée en ce que les poutres (8, 20, 24, 28) sont durcies.

4. Herse alternative selon la revendication 1, caractérisée en ce que dans la direction longitudinale de la poutre (8, 20, 24, 28) à intervalles, entre les branches opposées (12, 18, 23, 14, 19, 27) de la poutre (8, 20, 24, 28), on a des butées (16) de façon qu'en position normale des branches (12, 18, 23, 14, 19, 27) les butées (16) ont entre elles au moins une distance (A) prise dans la direction d'une branche (14, 19, 27).

5. Herse alternative selon la revendication 4, caractérisée en ce que les butées (16) sont réglables.

6. Herse alternative selon la revendication 5, caractérisée en ce que les butées (16, 21) limitent l'angle de pliage des branches (12, 18, 23, 14, 19, 27).

7. Herse alternative selon la revendication 1, caractérisée en ce qu'elle comporte un matériau d'amortissement (21) placé entre les branches libres (18, 19) des poutres de herse (17).

8. Herse alternative selon la revendication 1, caractérisée par des pièces de renforcement (25) prévues sur les poutres (22) au niveau des branches d'oscillation (13).

9. Herse alternative selon la revendication 1, caractérisée en ce que les branches libres (12, 14) des poutres (3) ont une longueur (L) différente.

10. Herse alternative selon la revendication 1, caractérisée en ce que la poutre avant (12) a une élasticité inférieure à la poutre arrière (14).

11. Herse alternative selon la revendication 1, caractérisée en ce qu'au moins une branche (27) de la poutre (26) comporte des encoches (29).

12. Herse alternative selon la revendication 10 ou 11, caractérisée en ce que les encoches (29) sont différentes sur les deux poutres.

13. Herse alternative selon la revendication 1, caractérisée en ce que les dents des poutres avant ont une longueur différente des dents de la poutre arrière.

14. Herse alternative selon la revendication 13, caractérisée en ce que les dents de la poutre avant ont une longueur inférieure aux dents de la poutre arrière.

FIG.1

FIG.2

FIG.3

FIG.4